(19) Europäisches Patentamt
European Patent Office
Office européen des brevets

(11) **EP 2 189 819 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(51) Int Cl.:
***G01V 3/08*** *(2006.01)*

(21) Anmeldenummer: **09173012.7**

(22) Anmeldetag: **14.10.2009**

# (54) Verfahren und handgeführter Sensor mit adaptiver Detektionsschwelle zur Detektion von in Bauwerkuntergründen eingebetteten Fremdobjekten

Method and handheld sensor with adaptive detection beam for detecting foreign objects embedded in structure bases

Procédé et capteur manuel doté d'un seuil de détection adaptatif pour la détection d'objets étrangers encastrés dans des sous-sols de constructions

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.11.2008 DE 102008058457**

(43) Veröffentlichungstag der Anmeldung:
**26.05.2010 Patentblatt 2010/21**

(73) Patentinhaber: **HILTI Aktiengesellschaft**
**9494 Schaan (LI)**

(72) Erfinder:
- **Cipriano, Patrik**
  **9475, Sevelen (CH)**
- **Gogolla, Torsten**
  **9494, Schaan (LI)**
- **John, Andreas**
  **8892, Berschis (CH)**
- **Würsch, Christoph**
  **9470, Werdenberg (CH)**

(56) Entgegenhaltungen:
**EP-A2- 0 735 384**
**WO-A1-2004/095076**
**DE-A1-102005 007 803**
**DE-A1-102005 015 325**
**DE-A1-102005 015 326**
**DE-A1-102006 025 881**

EP 2 189 819 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Detektion von in Bauwerkuntergründen eingebetteten Objekten wie Kabel, Armierungseisen, Leitungsrohre und dergleichen durch Überwischen oder Überstreichen eines bestimmten Oberflächenareals des zu untersuchenden Bauwerkgrunds mittels eines handgeführten Sensors mit variabler Detektionsschwelle. Die Erfindung bezieht sich außerdem auf einen handgeführten Sensor mit variabler Detektionsschwelle zur Durchführung des Verfahrens.

Als Detektoren in handgeführten oder handgehaltenen Sensoren zur Detektion von in gängigen bauwerklichen Untergründen wie Beton, Ziegel, Holz, Gips etc. eingeschlossenen Objekten kommen induktive Sensoren, insbesondere Wirbelstromsensoren, Flussführungsdetektoren, magnetische Sensoren wie Hall-, Fluxgate- und magnetoresistive Sensoren, aber auch kapazitive Detektoren (z.B. Stud-Sensoren) oder auch Sensoren in Frage, welche ein elektrostatisches Feld messen, wie Brumm-Detektoren oder Life-Wire-Detektoren.

Objekte im hier gemeinten Sinne sind prinzipiell in Wänden und Böden oder dergleichen Untergründe eingebettete Elemente wie Kabel, Armierungseisen, Leitungsrohre, unerwünschte Holzbalken und dergleichen, die es aufzuspüren und bei der Bearbeitung des betreffenden Untergrunds mittels eines Abbaugeräts (Bohrer, Bohrhammer, Meißel und dergleichen) möglichst zu vermeiden gilt.

Da die Signalstärken typischer handgeführter Sensoren, auch als "Feldsensoren" bezeichnet, sehr stark vom Oberflächenabstand der im Bauwerkuntergrund eingebetteten Objekte der genannten Art abhängen, nämlich bis zur inversen sechsten Abstandspotenz, benötigen solche Sensoren eine sehr hohe Signaldynamik um einerseits nahe der Oberfläche und andererseits tiefer liegende Objekte detektieren zu können. Die Detektion mittels eines solchen handgeführten Sensors geschieht normalerweise durch mehrfaches Überstreichen oder Überwischen der Stelle, wo ein betreffendes störendes Objekt vermutet wird, mittels des Sensors. Unter Einsatz eines Schwellwert-Detektors wird ab einer gewissen Signalstärke anzeigt, dass sich unter dem Sensor ein Objekt befindet. Aufgrund von Einflüssen durch den Untergrund selbst, z.B. bei ferritischen Untergründen wie sie gewisse Ziegelarten darstellen oder magnetischen Kieseleinschlüsse im Beton sowie durch veränderte dielektrische Eigenschaften, Leitfähigkeit des Untergrunds und dergleichen, wird das Signal des Sensors mehr oder weniger in einer nicht kontrollierbaren Weise abgeschwächt. Eine konstante Abtastschwelle, also ein Detektor mit konstant eingestelltem Schwellwert kann nicht verwendet werden. Die Anwendung des Sensors verlangt außerdem, dass auch tiefer liegende und kleinere Objekte neben größeren oder näher an der Oberfläche liegenden Objekten, welche ein um Größenordnungen stärkeres Signal liefern, noch zuverlässig detektiert werden können. Aus diesem Grund werden in Sensoren der genannten Art typischerweise variable Detektionsschwellen angewendet.

Damit solche variablen Detektionsschwellen zuverlässig funktionieren, ist es notwendig mindestens ein Mal über das gesamte zu untersuchende Oberflächenareal des Bauwerkuntergrunds zu scannen, d.h. mit dem handgeführten Sensor zu überstreichen oder zu überwischen. Erst beim Durchlaufen eines Maximums kann die Detektionsschwelle zuverlässig gesetzt werden. Wird dabei ein Objekt nicht vollständig überstrichen, so kommt es zu Fehldetektionen, die auch als "Überdetektionen" bezeichnet werden. Vom Sensor kann dabei nicht unterschieden werden, ob das registrierte Maximum durch ein Überstreichen oberhalb und über das Objekt oder lediglich durch eine Annäherung und Richtungsänderung in Bezug auf das eingebettete Objekt verursacht wurde.

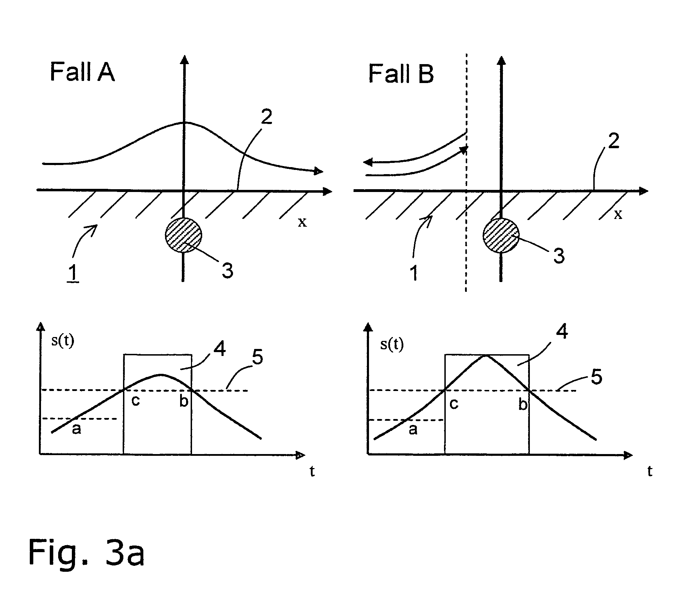

Dieses Problem wird anhand der Fig. 3a bis 3c der beigefügten Zeichnungen näher erläutert:

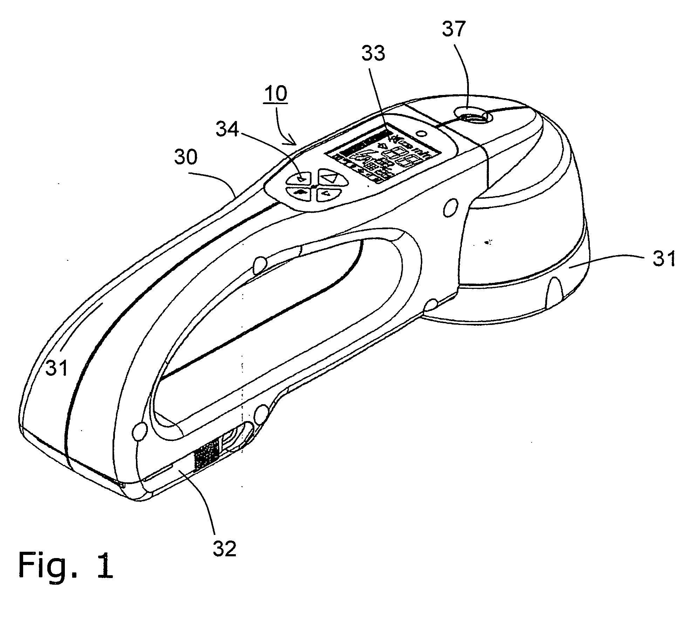

Ein zu untersuchender Bauwerkuntergrund 1 wird mittels eines handgeführten Sensors 10 (siehe Fig. 1, wird später näher erläutert) im Bereich eines Oberflächenareals 2 in einer Abtastrichtung x überstrichen. Unterhalb der Oberfläche befindet sich in einem gewissen Abstand ein aufzuspürendes Objekt 3, beispielsweise ein Armierungseisen. Ein Scanvorgang mit einem Sensor 10, der auch als Wischsensor bezeichnet werden kann, wird anhand von Fall A in Fig. 3a erläutert. Der Benutzer beginnt mit dem Scanvorgang links vom Objekt 3. Da zu Beginn nicht bekannt ist, wie gross das Signal s(t) wird, ist die Detektionsschwelle für eine Objektdetektion ebenso unbekannt. Es wird zunächst eine sehr niedrige Detektionsschwelle angesetzt, die bereits im Punkt a (unteres Diagramm links, Fig. 3a) überschritten wird, so dass hier bereits die Objektindikation aktiviert wird. Erst nach Überstreichen des Objekts bzw. des Maximums von s(t) an Punkt b kann die variable obere Detektionsschwelle gesetzt und die Objektindikation wieder deaktiviert werden. Zur genauen Lokalisierung muss der Benutzer nun den Sensor 10 zurückbewegen, so dass bei jetzt bekannter oberer Detektionsschwelle im Punkt b die Objektindikation wieder aktiviert und im Punkt c erneut deaktiviert wird. Der Objektindikationsbereich ist nun im Vergleich zur ersten Objektüberstreichung eingeschränkt. Auch wenn der Benutzer den Sensor 10 mehrmals hin und her bewegt, bleiben die obere Detektionsschwelle und damit der eingeschränkte Objektindikationsbereich erhalten. Im Fall B nähert sch der Sensor 10 zunächst dem Objekt 3, wird aber bevor er das Objekt 3 erreicht zurückbewegt. Auch hier wird bei der ersten Annäherung ein Objekt zwischen den Punkten a und b und beim Zurückbewegen zwischen den Punkten b und c angezeigt. Die Objektindikation ist aber in diesem Fall fehlerhaft. In diesem Zusammenhang wird von einer Überdetektion gesprochen. Die beiden Fälle A und B können im Zeitverlauf bzw. Signalverlauf s(t) nicht unterschieden werden. In beiden Fällen wird eine bestimmte Detektionsschwelle 5 festgelegt und gegebenenfalls angezeigt, wobei jedoch der rechte Fall B im Sinne der hier verwendeten Begriffsdefinition eine Fehldetektion darstellt.

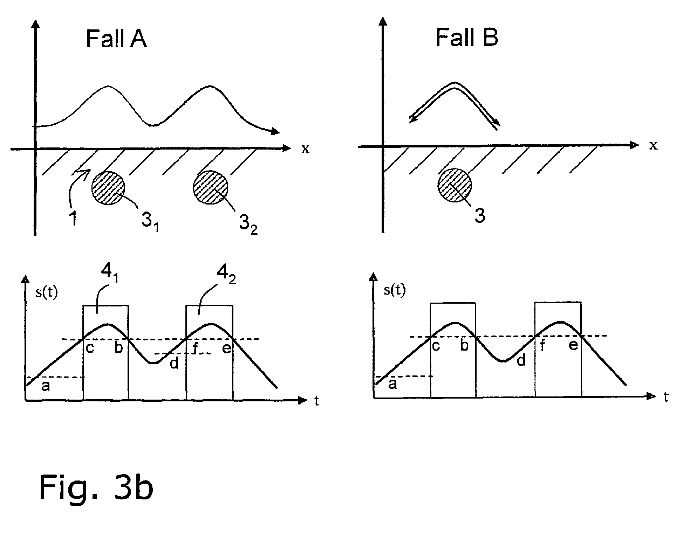

In Fig. 3b ist ein weiterer kritischer Fall dargestellt. Hier überstreicht der Sensor 10 im Fall A zwei eingebettete Objekte $3_1$, $3_2$. Bei Überschreiten einer ersten Schwelle im Punkt a wird entsprechend Fig. 3a die Objektindikation aktiviert und in Punkt b wieder deaktiviert. Die obere Detektionsschwelle ist im Punkt b damit bekannt. Sie muss im Punkt d aber nach Überstreichen des lokalen Minimums wieder gelöscht werden, da nicht bekannt ist, wie gross das nachfolgende Maximum wird. Es wird im Punkt d wieder eine neue Minimalschwelle angesetzt, die dort überschritten wird, so dass in d die Objektindikation aktiviert wird. Erst im Punkt e ist die neue obere Detektionsschwelle bekannt. Hier wird die Objektindikation wieder deaktiviert. Durch Zurückbewegen des Sensors 10 wird der Objektindikationsbereich entsprechend Fig. 3a auf die Punkte e und f beschränkt. Im Fall B der Fig. 3b wird der Sensor wie im Fall der Fig. 3a über das Objekt 3 hin und her bewegt. Es entsteht die gleiche Signalsignatur s(t) wie im Fall A der Fig. 3a. Im Punkt d darf aber im Gegensatz zu Fall A die im Punkt b ermittelte obere Detektionsschwelle nicht gelöscht werden, damit der eingeschränkte Objektindikationsbereich erhalten bleibt.

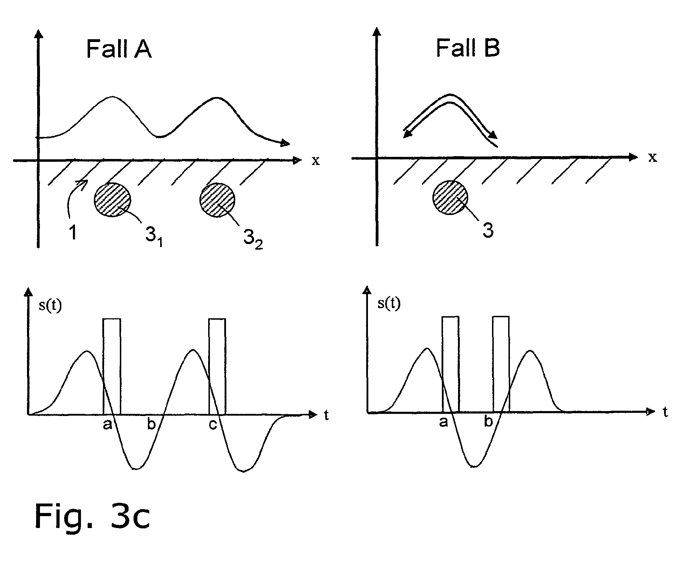

Fig. 3c zeigt das Verhalten gemäss Fig. 3b für einen differentiellen Sensor. Der Sensor 10 überstreicht im Fall A wieder zwei eingebettete Objekte $3_1$, $3_2$. Beim differentiellen Sensor korrespondieren die Objektpositionen mit den Nulldurchgängen negativer Steigung des Signals s(t). Genau zwischen den beiden Objekten $3_1$, $3_2$ befindet sich aber aus Gründen der Symmetrie ein weiterer Nulldurchgang b mit positiver Steigung, der jedoch nicht mit einem Objekt 3 in Verbindung steht. Dies führt zu einer fehlerhaften Objektindikation bzw. Fehldetektion zwischen den beiden Objekten. Im Fall B wird der Sensor wieder über ein Objekt hin und her bewegt. In diesem Fall korrespondiert der Nulldurchgang b mit positiver Steigung sehr wohl mit der Objektposition.

Bei allen drei anhand der Fig. 3a bis 3c erläuterten Fällen ist mit den bisher bekannten Wischsensoren, auch mit differentiellen Sensoren eine eindeutige Zuordnung eines vergrabenen Objekts nicht zuverlässig möglich, weil zwischen den jeweiligen Fällen A und B nicht unterschieden werden kann.

DE 10 2005 015 326 offenbart ein Verfahren und einen handgeführten Sensor zur Detektion von in Bauwerkuntergründen eingebetteten Objekten mit einer variablen Detektionsschwelle. Der Sensor und das Detektionsverfahren eignen sich nicht, um zwischen den Fällen A und B zu unterscheiden.

WO 2004/095076 offenbart ein Verfahren und einen handgeführten Sensor zur Detektion von in Bauwerkuntergründen eingebetteten Objekten mit mehreren Beschleunigungssensoren. Aus den Beschleunigungswerten wird durch Integration die Position des Empfängers bestimmt. Der Sensor und das Detektionsverfahren eignen sich nicht, um zwischen den Fällen A und B zu unterscheiden.

Der Erfindung liegt die Aufgabe zugrunde, eine Fehldetektion zu vermeiden oder mindestens eine Fehldetektionsrate von Sensoren der genannten Art zu verringern, um dadurch die Zuverlässigkeit einer Objektdetektion zu erhöhen. Außerdem soll angestrebt werden, auch die Genauigkeit und Zuverlässigkeit bei der Bestimmung einer Objektüberdeckung, insbesondere einer Armierungseisen-Überdeckung und des Durchmessers der im Bauwerkuntergrund verborgenen Armierungseisen zu verbessern.

Die Erfindung besteht bei einem Verfahren zur Detektion von in Bauwerkuntergründen eingebetteten Objekten wie Kabel, Armierungseisen, Leitungsrohren und dergleichen durch Überwischen eines bestimmten Oberflächenareals des zu untersuchenden Bauwerkuntergrunds mittels eines handgeführten Sensors mit variabler Detektionsschwelle darin, dass zur Verringerung einer Fehldetektion bei der Bestimmung der Detektionsschwelle eine Bewegungsrichtungsänderung des über das Oberflächenareal geführten Sensors in Bezug auf ein eingebettetes Objekt erfasst wird. Die Beschleunigung des handgeführten Sensors wird in mindestens zwei Richtungen in Bezug auf ein eingebettetes Objekt erfasst, um aus den Beschleunigungswerten die entsprechenden Geschwindigkeitswerte zu errechnen, so dass sich aus den Geschwindigkeitswerten eine Aussage über eine Bewegungsrichtungsumkehr des handgeführten Sensors bezüglich eines eingebetteten Objekts ermitteln lässt. Vorteilhafterweise wird aus dem oder den Geschwindigkeitswerten ein Signal als Funktion des Sensorweges generiert, mit dem zeitlichen Verlauf des vom Objekt gelieferten Signals korreliert und daraus eine Aussage über die Abmessung des eingebetteten Objekts gewonnen.

Ein handgeführter Sensor mit variabler Detektionsschwelle zur Detektion von in Bauwerkuntergründen eingebetteten Objekten wie Kabel, Armierungseisen, Leitungsrohren und dergleichen durch Überwischen eines Oberflächenareals eines zu untersuchenden Bauwerkuntergrunds ist erfindungsgemäß dadurch gekennzeichnet, dass der Sensor zur Verringerung einer Fehldetektion bei der Bestimmung der Detektionsschwelle mit einer Bewegungssensoreinrichtung zur Bestimmung einer Bewegungsrichtungsänderung des über das Oberflächenareal geführten Sensors in Bezug auf ein eingebettetes Objekt ausgestattet ist. Die Bewegungssensoreinrichtung ist mit einem mindestens zweiachsigen Beschleunigungssensor und einer von den Signalen des Beschleunigungssensors gespeisten Einrichtung zur Messung der momentanen Wischgeschwindigkeit des Sensors und zur Erfassung der Richtungsänderungspunkte des über das Oberflächenareal wischenden Sensors in Bezug auf ein eingebettetes Objekt ausgestattet. In der Regel und vorzugsweise wird die Einrichtung zur Messung der momentanen Wischgeschwindigkeit mit mindestens einem Integrator pro Beschleunigungssensor zur Bestimmung der momentanen Wischgeschwindigkeit des Sensors und zur Detektion eine Richtungsänderung in Bezug auf ein in den Bauwerksgrund eingebettetes Objekt ausgestattet sein.

Vorteilhaft ist darüber hinaus der Sensor mit einer Einrichtung zur Erfassung des durch den Sensor beim wischenden Abtasten des Oberflächenareals zurückgelegten Wegs auszustatten, wobei die Einrichtung zur Wegerfassung einen optischen, zweidimensionalen Korrelator zur Bestimmung der Relativbewegung auf dem zu untersuchenden Oberflächenareal des Bauwerkuntergrunds aufweist. Dabei kann ergänzend eine optische Visualisierungseinrichtung vorgesehen sein, auf der auf der Basis der von dem Korrelator gelieferten Signale eine Darstellung der Trajektorie des über das Oberflächenareal wischenden Sensors erfolgt. Der Korrelator kann mindestens zwei in einem vorgegebenen Winkel zueinander stehende Laser-Abstandssensoren aufweisen oder, alternativ, eine in den Sensor integrierte nach Art einer Computer-Maus arbeitende Laser-Stream-Sensoreinrichtung sein.

Bei einer vorteilhaften und für die Bestimmung der Detektionsschwelle des Sensors optimierten Ausführungsform der Erfindung ist ein Trippel von Beschleunigungssensoren vorgesehen, einerseits mit einem rechtwinklig zueinander stehenden Paar von Beschleunigungssensoren sowie einem dritten in einem festgelegten Abstand von dem Beschleunigungssensorpaar angeordneten Beschleunigungssensor, dessen Messachse auf eine der Messachsen des rechtwinklig zueinander stehenden Beschleunigungssensorpaars ausgerichtet ist. Um zusätzlich einen Rotationswinkel des Sensors um einen Fixpunkt zu erfassen, kann zusätzlich ein Gyroskop im Sensor integriert sein, wobei die Beschleunigungssensoren einerseits mikromechanische Beschleunigungsmesser und das Gyroskop vorteilhafterweise ein mikromechanischer Vibrations-Drehratensensor nach dem Coriolisprinzip sein können.

Die Erfindung und vorteilhafte Einzelheiten werden nachfolgend unter Bezug auf die Zeichnung in beispielshaften Ausführungsformen näher erläutert.

Es zeigen:

**Fig. 1** eine Perspektivdarstellung eines handgeführten Sensors zur Detektion von in einen Bauwerkuntergrund eingebetteten Ob- jekten gemäß der Erfindung;

**Fig. 2** eine Prinzip-Schnittdarstellung des handgeführten Sensors nach Fig. 1;

**Fig. 3a bis 3c** eine Prinzipdarstellung des Verlaufs von Signalen, die mit ei- nem handgeführten Sensor zur Detektion von Objekten in Bau- werkuntergründen generiert werden, wobei mehrere unterschiedliche Fallkonstellationen zu berücksichtigen sind, wie be- reits oben erläutert;

**Fig. 4** die Prinzipdarstellung eines Sensors, der auf unterschiedlichen Spuren (Trajektorien) über einen zu untersuchenden Bauwerk- untergrund geführt wird, in dem sich ein zu ermittelndes Ob- jekt beispielsweise ein Armierungseisen befindet;

**Fig. 5** ein Funktions-Blockschaltbild zur Signalverarbeitung bei der Ermittlung einer Richtungsumkehr des über die Bauwerkober- fläche wischenden Sensors in Bezug auf ein im Untergrund ein- gebettetes Objekt;

**Fig. 6** Signalverläufe eines Absolutsensors (Fall A) und eines differen- tiellen Sensors (Fall B) aus denen sich bei Anwendung der Er- findung und direkter Ermittlung des Abtastwegs eine Aussage über die Abmessungen, insbesondere die Durchmesserabmessungen eines Objekts im Untergrund gewinnen lässt;

**Fig. 7** die Prinzipdarstellung eines vorteilhaften Ausführungsbeispiels eines erfindungsgemäßen Sensors, bei dem drei Beschleuni- gungssensoren und ein Gyroskop eingebaut sind;

**Fig. 8** den grundsätzlichen Schaltungsaufbau in Blockbilddarstellung eines erfindungsgemäßen Sensors mit zwei Beschleunigungs- sensoren und einem Gyroskop (Drehratenmesser);

**Fig. 9** die Blockschaltbildanordnung eines erfindungsgemäßen Sen- sors mit drei Beschleunigungssensoren in der Anordnung nach Fig. 7; und

**Fig. 10** die Blockschaltbilddarstellung eines erfindungsgemäßen Sen- sors mit zwei optischen Korrelatoren.

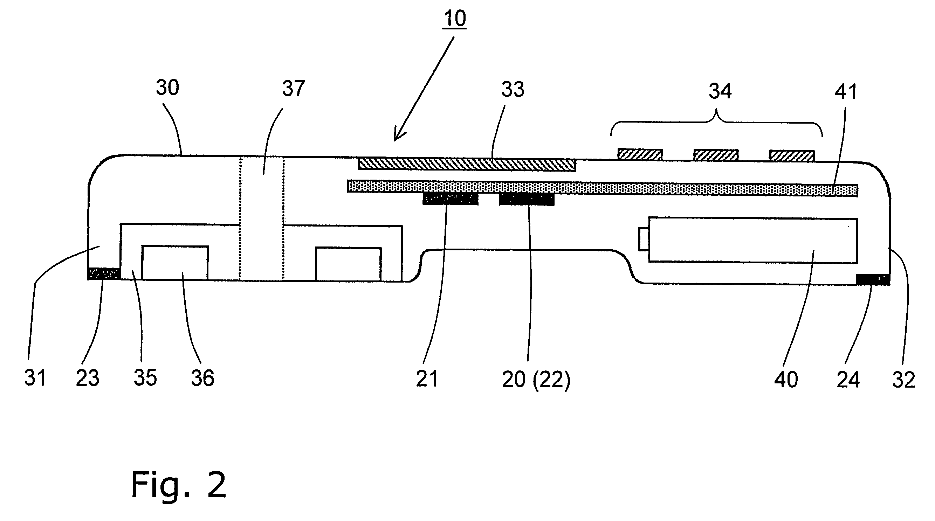

Die isometrische Darstellung eines handgeführten Sensors 10 zur Detektion von Fremdobjekten, die in Bauwerkuntergründen eingebettet sein können, gemäß Fig. 1 weist ein handliches Gehäuse 30 mit Handgriff auf, das gewisse Ähnlichkeit mit einem klassischen Telefonhörer erkennen lässt. Im vorderen, dem Sensorbereich 31 sind bodenseitig beispielsweise eine Erreger- oder Sendespule 35 (vgl. Fig. 2) sowie eine dazu koaxial im Inneren angeordnete Sensor- oder Empfängerspule 36 eingebaut. Eine Durchgangsöffnung 37 dient zur optischen Markierung auf der Oberfläche eines zu untersuchenden Bauwerkuntergrunds, beispielsweise von Positionen von im Bauwerkuntergrund eingebetteten Armierungseisen. Am fußseitigen, unteren Ende 32 ist ein Freiraum zur Aufnahme einer Batterie 40 vorgesehen. Am kopfseitigen sowie am fußseitigen Ende des handgeführten Sensors kann jeweils ein optischer Korrelator 23 bzw. 24 eingesetzt sein, dessen Funktion weiter unten erläutert wird. Im Inneren, rein schematisch angedeutet, befindet sich eine Leiterplatte 41 mit der gesamten Verarbeitungselektronik. Auf dieser Leiterplatte 41 ist außerdem an geeigneter Position mindestens ein Beschleunigungssensor 20, 22 sowie zusätzlich oder alternativ ein mikromechanischer Drehratensensor (Gyroskop) vorzugsweise in Strapdown-Konfiguration fixiert. Eine Anzeigevorrichtung 33 sowie eine Bedienungstastatur 34 sind in die oberseitige Oberfläche des Gehäuses 30 eingebettet.

Um die oben erläuterte Fehldetektion zu vermeiden, besteht der Erfindungsgedanke darin, die Bewegung des handgeführten Sensors auf einem zu untersuchenden Oberflächenareal eines Bauwerkuntergrunds, beispielsweise auf einer Wand mittels eines zusätzlichen Bewegungssensors zu ermitteln. Dabei soll insbesondere die Bewegungsrichtungsumkehr des Sensors detektiert werden, um zu entscheiden, ob unter Bezug auf die Fig. 3a bis 3c der Fall A (direktes Überstreichen des Objekts) oder der Fall B (Annäherung und nachfolgendes Zurückweichen vom Objekt) vorliegt.

Durch den in den Sensor 10 eingebauten Bewegungsumkehrdetektor bzw. Bewegungsdetektor kann jetzt in den Fällen der Fig. 3a bis 3c zwischen den jeweiligen Fällen A und B unterschieden werden. Insbesondere kann mit Hilfe des Bewegungsumkehrdetektors in den jeweiligen Fällen B erkannt werden, dass die Bewegungsumkehr hier nicht nach der Überschreitung eines Maximums erfolgt, so dass die Objektindikation deaktiviert wird.

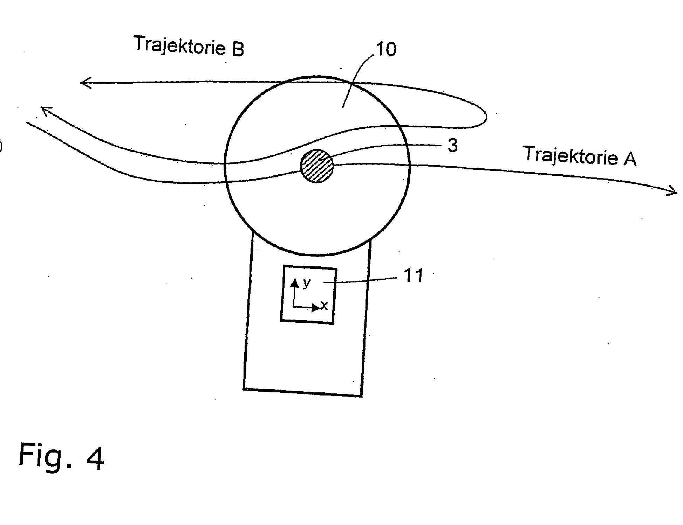

Eine vergleichsweise einfache, zuverlässige, aber auch kostengünstige Lösung für das der Erfindung zugrunde liegende Problem kann mittels mehrachsiger Beschleunigungsaufnehmer, insbesondere mit einem Beschleunigungssensorpaar mit einem nachgeschalteten Geschwindigkeitsabschätzer gelöst werden. Dies ist anhand der Fig. 4 veranschaulicht.

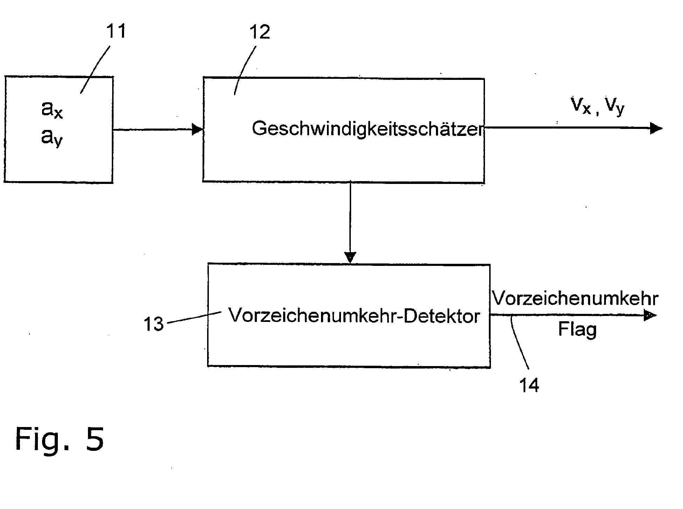

Der nur in seinen schematischen Umrissen gezeigte Sensor 10 ist mit einem Beschleunigungssensorpaar 11 ausgestattet, das vorzugsweise und in aller Regel Beschleunigungen in einer Längs- bzw. Querrichtung des Sensors 10 erfasst. Ein solches Paar von Beschleunigungsmessern kann auch als 2D-Beschleunigungssensor bezeichnet werden. Das Beschleunigungssensorpaar 11 liefert Beschleunigungswerte $a_x$ und $a_y$, welche - wie die Fig. 5 veranschaulicht - einem Geschwindigkeitsschätzer 12 zugeführt werden, der aus den Beschleunigungswerten wenigstens angenäherte Geschwindigkeitswerte $v_x$ und $v_y$ über entsprechende Integratoren liefert. Die Geschwindigkeitswerte $v_x$ und $v_y$ werden einem Vorzeichenumkehr-Detektor 13 zugeführt, der eine Vorzeichenumkehr und damit eine Richtungsumkehr der Bewegung des Sensors 10 in Bezug auf ein in den Bauwerkuntergrund eingebettetes und zu ermittelndes Objekt erkennt und für einen Weiterverarbeitungsprozess eine Vorzeichenumkehr-Flag 14 liefert.

Der Geschwindigkeitsschätzer 12 kann im einfachsten Fall aus einem bandpassbegrenzten Integrator bestehen. Dabei können zusätzliche Randbedingungen berücksichtig werden, beispielsweise die, dass der Sensor 10 auf einem Flächenareal von beispielsweise 1 m Radius bewegt wird bzw. für eine zuverlässige Messung eine Raumkugel von etwa 1 m Radius nicht verlassen werden darf. Durch derartige Randbedingungen kann vermieden werden, dass die Integratoren wegdriften.

Der durch den Geschwindigkeitsschätzer 12 gelieferte Schätzwert der Geschwindigkeit kann vorteilhafterweise bei magnetischen oder induktiven Sensoren dazu verwendet werden, die Qualität einer Überdekkungs- und Durchmesserschätzung für die zu ermittelnden Objekte zu verbessern. Dabei ist zu berücksichtigen, dass es grundsätzlich zwei Signalformen gibt, welche genutzt werden können, um den Abstand eines Objekts von der Oberfläche des Bauuntergrunds, also die Tiefe und den Durchmesser des Objekts zumindest abschätzungsweise zu ermitteln.

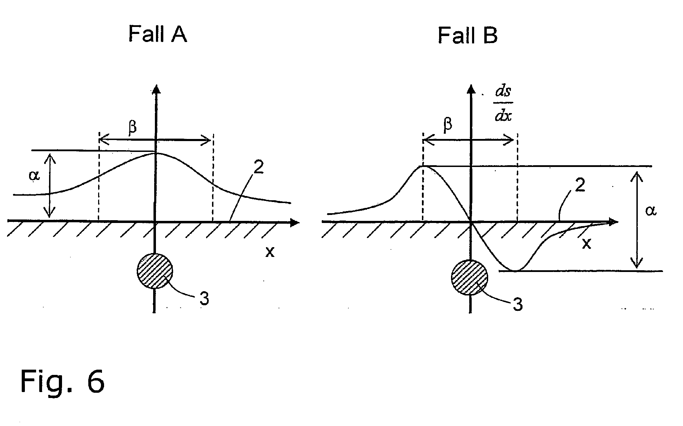

Enthält der Messkopf des Sensors nur eine Detektionsspule, so wird er direkt über einem metallischen Objekt, beispielsweise einem Armierungseisen ein Maximum feststellen. Ein solcher Sensor kann als Absolutsensor bezeichnet werden. Der Fall A in Fig. 6 veranschaulicht den Verlauf der Signalstärke als Funktion des Weges zentriert um den Ort des Objekts 3. Der Signalverlauf zeigt ein glockenförmiges Profil.

Verwendet man andererseits eine differentielle Anordnung, so misst man typischerweise eine S-Kurve (Fall B in Fig. 6), welche einen Nulldurchgang am Ort des Objekts 3 aufweist. Diese Kurve stellt die ortsabhängige Ableitung also die Differenz über einen definierten Sensorabstand d der Glockenkurve des Falls A dar. Daher auch der Name "differentielle" Sensoranordnung.

Aus beiden Kurven lässt sich bei Kenntnis des zurückgelegten Wegs x die Tiefe und der ungefähre Durchmesser des Objekts 3 bestimmen. Dies wird unter Bezug auf die beiden Signaldiagramme der Fig. 6 näher erläutert.

Zunächst gibt es keine direkte Information über den zurückgelegten Weg. Damit lässt sich bei einem handgeführten Sensor normalerweise auch keine Information über die Amplitude a in Bezug auf ein festgelegtes Wegstück $\beta$ gewinnen und nutzen. Wird aber gemäß der Erfindung ein Schätzwert für die Geschwindigkeit generiert, so lässt sich dieser nutzen, um aus dem Zeitsignal bzw. der zeitlichen Ableitung des Signalverlaufs (s(t) (Fig. 3a bis 3c) ein Signal als Funktion des Weges zu generieren. Ziel ist es also, einen Schätzwert für die örtliche Ableitung dieses Signalverlaufs zu bekommen, d.h.

gegeben ist s(t) und v(t), gesucht ist s(x).

Dabei bedeuten:

- s: Signal
- x: Weg
- t: Zeit
- V: Geschwindigkeit

Entweder es wird x(t) explizit durch eine bandbegrenzte Integrationsstufe berechnet. Dann kann s(x) direkt abgetastet werden (Interpolation). Eine weitere Möglichkeit ist, nicht s(x) direkt zu berechnen, sondern die örtliche Ableitung von s(x) nach x. Diese Ableitung ist nur noch vom Ort, nicht aber von der Zeit und damit von der Abtast- oder Scangeschwindigkeit abhängig.

$$\frac{ds}{dt} = \frac{ds[x(t)]}{dt} = \left(\frac{ds}{dx}\right)\left(\frac{dx}{dt}\right) \approx \left(\frac{ds}{dx}\right) \cdot v$$

Nach Auflösen nach ds/dx:

$$\frac{ds}{dx} = \left(\frac{ds}{dt}\right)\left(\frac{dt}{dx}\right) \approx \left(\frac{ds}{dt}\right) \cdot \frac{1}{v}$$

Aus diesem Signal lässt sich nun der Wegabschnitt, also die Breite β unabhängig von der Abtastgeschwindigkeit des Sensors bestimmen. Aus dem Streckenwert der Breite β lässt sich dann der Durchmesser des Objekts 3 wenigstens angenähert bestimmen. Es wird insoweit auf den Fachaufsatz von I. Alldred et al. "Determination of Reinforcing Bar Diameter and Cover by Analyising Traverse Profiles from a Cover Meter" in Conference Papers of International Symposium Non-Destructive Testing in Civil Engineering (NDT-CE), 26-28.09.1995, S. 721-728 sowie auf DE 35 35 117 C1 verwiesen.

Eine abgewandelte und verbesserte Ausführungsvariante der Erfindung besteht in der Verwendung eines optischen zweidimensionalen Korrelators (2D-Korrelator), mit dessen Hilfe sich die Relativbewegung des Sensors auf dem Oberflächenareal des Untergrunds bestimmen lässt. Eine solche Korrelatormessung ist beispielsweise in Anwendung bei einer handgeführten Druckvorrichtung, wie in US 2004/0012600 A1 beschrieben, grundsätzlich bekannt. Damit kann die Trajektorie des Sensors direkt aufgezeichnet werden. Als geeignete Sensoren kommen Laser- oder LED-Maus-Sensoren in Frage.

Für eine einzelne Abtastbewegung des Sensors über ein Objekt und/oder zur Detektion der Richtungsumkehr bei der Scanbewegung kann die vom 2D-Korrelator gelieferte Weginformation direkt verwendet werden. Die Richtungsumkehr kann dann einfach durch eine Vorzeichenumkehr der Wegdifferenz x(tn)-x(tn-1) oder durch eine Maximumdetektion aus der Weginformation x(t) selbst erkannt werden. Es müssen geeignete Schwellen und Filter vorgesehen werden, um eine robuste Umkehrdetektion zu realisieren. Damit lässt sich auch die Fehldetektion, nämlich durch Detektion der Richtungsumkehr, vermeiden und die Detektionsgenauigkeit (Überdeckung, Bestimmung des Objektdurchmessers) wird verbessert. Ist beispielsweise die Weginformation bekannt, so reicht eine einzige Spule aus, um gleichzeitig den Durchmesser und die Tiefe eines Armierungseisens zu bestimmen. Bei einer differentiellen Spule verwendet man die Maxima und Minima der S-Kurve (Ferroscan-Technologie). Diese werden für einen Durchmesser und alle Tiefen als Lookup-Tabelle abgelegt. Bei einer einzelnen nicht-differentiellen Spule werden das Maximum und die Halbwertsbreite verwendet. Die erfindungsgemäß ermittelte Weginformation ist also eine wichtige Größe, welche die Zuverlässigkeit der Detektoren ganz wesentlich erhöht.

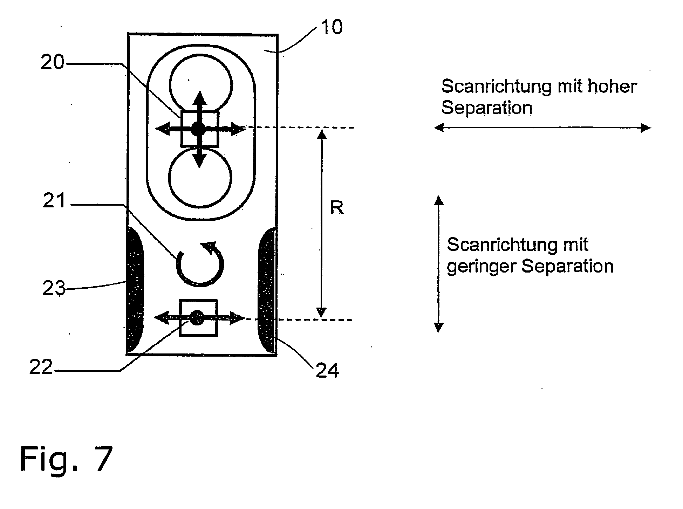

Anhand der Fig. 7 wird eine spezielle vorteilhafte Ausführungsvariante der Erfindung verdeutlicht insbesondere zur Optimierung der Detektionsschwelle bei Detektoren, die eine zweifache Symmetrie aufweisen. Die Detektionseigenschaften solcher Sensoren unterscheiden sich je nach dem, ob der Sensor von links nach rechts oder von oben nach unten bewegt wird. Dies ist vor allem bei magnetischen Detektoren vorteilhaft, weil dadurch gleichzeitig eine gute Separation in Scanrichtung x und eine große Detektionstiefe erreicht werden kann. Hierbei ist zu beachten, dass ein induktiver (magnetischer) Sensor entweder eine hohe Separation oder eine hohe Detektionstiefe erreichen kann. Beides gleichzeitig ist nicht möglich. Hier muss ein Tradeoff zwischen Detektionstiefe und Separation gewählt werden. Der Spulendurchmesser bestimmt gleichzeitig die Separation (großer Durchmesser → geringe Separation) als auch die Detektionstiefe (großer Durchmesser → große Detektionstiefe). Ein guter Kompromiss ist die Verwendung von ovalen oder länglichen Spulen. Dann muss allerdings immer in die gleiche Richtung gescannt werden (z.B.: links-rechts).

Wird der Sensor jedoch am Ort der Detektion verdreht, so ändert sich die Signalstärke und die Detektionsschwelle, die verwendet wurde um zu entscheiden, ob sich ein Objekt unter der Sensoranordnung befindet, ist nicht mehr korrekt. Die Detektion schaltet beispielsweise auf "kein Objekt". Um dies zu vermeiden, wäre es vorteilhaft, den momentanen Rotationswinkel um einen Fixpunkt, beispielsweise den Mittelpunkt einer im Sensor vorhandenen Spulenanordnung zu kennen.

Bei der Ausführungsvariante nach Fig. 7 ist zunächst ein 2D-Beschleunigungssensor 20 vorhanden, der Beschleunigungen des Sensors 10 in Längs- und Querrichtung des Sensors 10 erfasst. Zusätzlich ist in einem Abstand R, insbesondere in einer Abtastrichtung mit geringer Separation, ein dritter Beschleunigungssensor 22 eingebaut, dessen Messachse auf eine Abtastrichtung mit hoher Separation ausgerichtet ist. Damit lässt sich der Drehwinkel des Sensors 10 zumindest ungefähr berechnen, so dass sich die entsprechenden Detektionsschwellen verwenden lassen, die tabellarisch als Funktion des Drehwinkels abgelegt sind.

Zusätzlich kann der Sensor 10 mit einem Gyroskop 21, beispielsweise einem Drehratensensor nach dem Coriolisprinzip in mikromechanischer Ausführung versehen sein, durch den sich der momentane Rotationswinkel des Sensors insbesondere um den Mittelpunkt einer Spulenanordnung erfassen lässt.

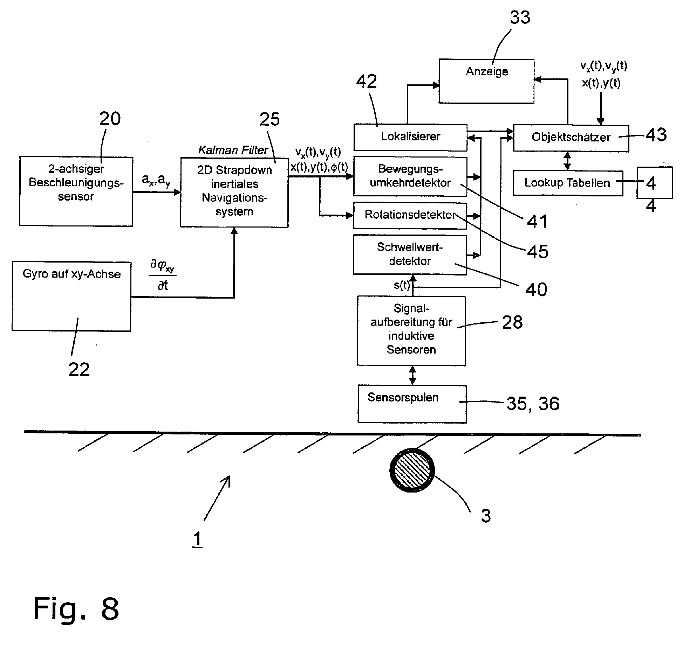

Fig. 8 veranschaulicht das prinzipielle Signalverarbeitungsschema in Blockbilddarstellung für den Fall der Sensoranordnung nach Fig. 7, d.h. wenn der Sensor 10 mit einem zweiachsigen Beschleunigungssensor 20 und einem Drehratensensor bzw. Gyroskop 21 ausgestattet ist, das die Drehraten, also die Winkelgeschwindigkeiten erfasst. Die Beschleunigungswerte $a_x$, $a_y$ der beiden Beschleunigungssensoren 20 sowie die Drehraten $\delta\varphi_{xy}$ durch $\delta t$ werden in einem inertialen Strapdown-Navigationssystem umgerechnet zu zeitabhängigen Strecken- bzw. Positionswerten x(t) und y(t), zeitabhängigen Geschwindigkeitswerten $v_x(t)$ und $v_y(t)$ und einem zeitabhängigen Winkelwert $\phi(t)$. Eine Signalkonditionierungseinheit 28 erstellt aus dem Sensorsignal der Abtastspulenanordnung 35, 36 den zeitlichen Signalverlauf s(t). Dieses Signal s(t) wird einem Schwellwertdetektor 40 zur Verfügung gestellt, der die variable Detektionsschwelle ermittelt. Ein Bewegungsumkehrdetektor 41 erkennt eine Bewegungsumkehr durch Auswertung der ihm zur Verfügung gestellten Strecken- bzw. Geschwindigkeitswerte. Ein Lokalisierer 42 gewährleistet mit der Detektionsschwelle und der Bewegungsumkehrinformation eine zuverlässige und eng tolerierte Objektlokalisierung bei einem Scan über ein Objekt 3. Gemäss dem Vorgehen nach Fig. 3a bis Fig. 3c wird somit eine Überdetektion vermieden. Der Objektaufenthaltsbereich wird z.B. mit einer roten LED oder mit einem Symbol auf der Anzeige 33 dargestellt. Ein Rotationsdetektor 45 erkennt mit Hilfe des Winkelwertes $\phi(t)$ eine Verdrehung des Sensors 10. Eine Verdrehung über einem Objekt 3 kann bei nicht symmetrischen Sensoranordnungen eine Signalmodulation hervorrufen, die der Signalsignatur einer translatorischen Bewegung weg vom Objekt 3 entspricht, so dass - obwohl der Sensor 10 sich weiterhin über einem Objekt 3 befindet - die Objektindikation aufgehoben wird, weil durch Rotation ein Signalabfall generiert wird. Diese sogenannte Unterdetektion wird vermieden, da dem Lokalisierer 42 der Rotationszustand übermittelt wird. Des Weiteren wird das Signal s(t) zusammen mit den Strekken- und Geschwindigkeitswerten einem Objektschätzer 43 zur Verfügung gestellt, der mit Hilfe einer Lookup-Tabelle 44 die Objekttiefe und den Objektdurchmesser ermittelt und anschliessend, falls der Lokalisierer 42 ein Objekt 3 indiziert, auf der Anzeige 33 darstellt.

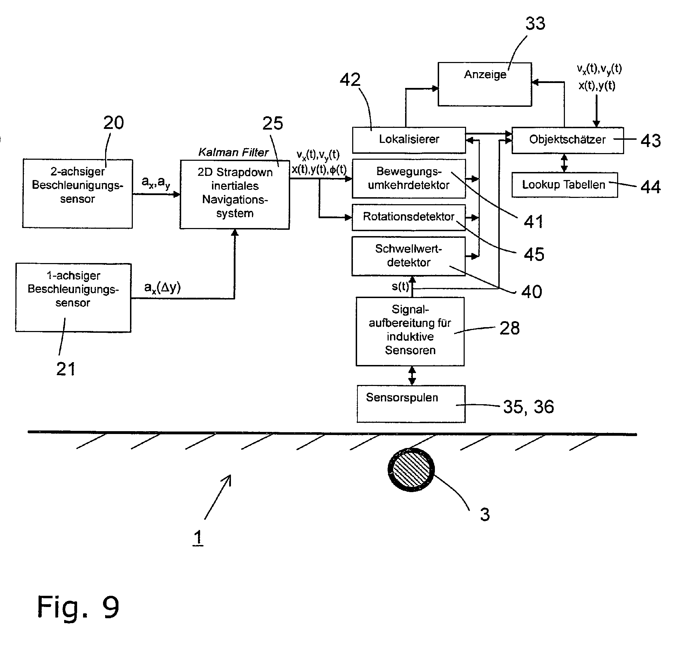

Die Signalverarbeitungsanordnung nach Fig. 9 entspricht im Wesentlichen der anhand der Fig. 8 bereits erläuterten, jedoch mit dem Unterschied, dass anstelle des Gyroskops 21, gegebenenfalls auch ergänzend zu dem Gyroskop 21, ein weiterer einachsiger Beschleunigungsmesser 22 (vgl. Fig. 7) vorgesehen ist. Die sonstige Signalaufbereitung und -verarbeitung bis zur Visualisierung des Messergebnisses auf der Anzeige 33 entspricht derjenigen nach Fig. 8.

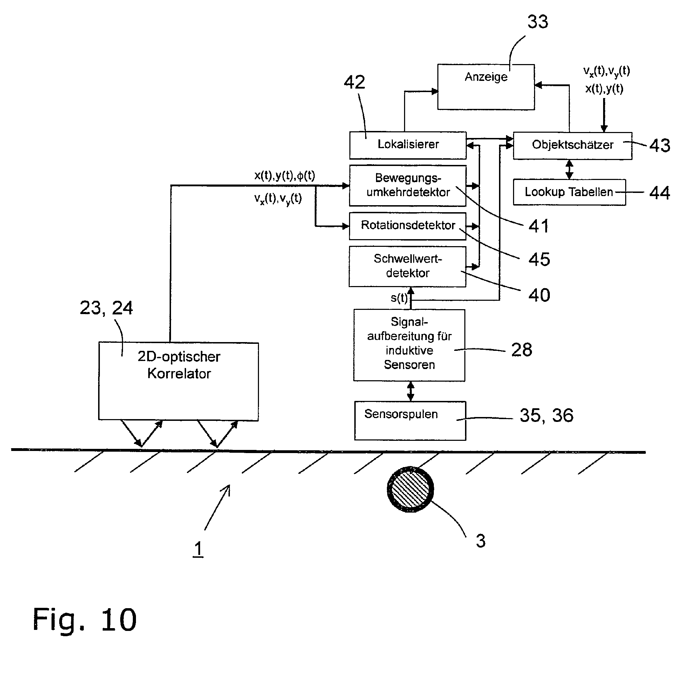

Die Fig. 10 veranschaulicht eine weitere oder Ergänzungsvariante eines induktiven Sensors gemäß der Erfindung mit Bestimmung von Tiefe und Durchmesser eines in einem Bauwerkuntergrund 1 eingebetteten Objekts 3. In diesem Fall sind zwei optische Korrelatoren 23, 24 (vgl. auch Fig. 2) vorgesehen. Die übrige Signalverarbeitung bis zur visuellen Darstellung des Messergebnisses auf der Anzeige 33 ist ähnlich wie bei den Ausführungsvarianten nach den Fig. 8 und 9.

Bei Anwendung der Erfindung lässt sich die oben erwähnte Fehldetektionsrate bei Sensoren, insbesondere induktiven Sensoren mit variabler Detektionsschwelle zur Detektion von in Bauwerkuntergründen eingebetteten Fremdobjekten verringern und gleichzeitig die Zuverlässigkeit der Detektion erhöhen. Außerdem lässt sich die Genauigkeit und Zuverlässigkeit der Bestimmung von Fremdobjekten, insbesondere Armierungseisen und deren Bewehrungsdurchmesser verbessern.

**Patentansprüche**

1. Verfahren zur Detektion von in Bauwerkuntergründen eingebetteten Objekten wie Kabel, Armierungseisen, Leitungsrohre und dergleichen durch Überwischen eines bestimmten Oberflächenareals (2) des zu untersuchenden Bauwerkuntergrunds (1) mittels eines handgeführten Sensors (10) mit variabler Detektionsschwelle, **dadurch gekennzeichnet, dass** zur Verringerung einer Fehldetektion bei der Bestimmung der Detektionsschwelle eine Bewegungsrichtungsänderung des über das Oberflächenareal (2) geführten Sensors (10) in Bezug auf ein eingebettetes Objekt (3) erfasst wird, wobei die Beschleunigung des handgeführten Sensors (10) in mindestens zwei Richtungen in Bezug auf ein eingebettetes Objekt (3) erfasst, aus den Beschleunigungswerten die entsprechenden Geschwindigkeitswerte errechnet und aus den Geschwindigkeitswerten eine Aussage über eine Bewegungsrichtungsumkehr des geführten Sensors (10) bezüglich eines eingebetteten Objekts (3) generiert wird.

2. Verfahren nach Anspruch 1, wobei aus den Geschwindigkeitswerten ein Signal als Funktion des Sensorweges generiert und daraus eine Aussage über die Abmessung und Tiefe des eingebetteten Objekts gewonnen wird.

3. Handgeführter Sensor mit variabler Detektionsschwelle zur Detektion von in Bauwerkuntergründen eingebetteten Objekten wie Kabel, Armierungseisen, Leitungsrohre und dergleichen durch Überwischen eines Oberflächenareals (2) eines zu untersuchenden Bauwerkuntergrunds (1), wobei der Sensor (10) zur Verringerung einer Fehldetektion bei der Bestimmung der Detektionsschwelle mit einer Bewegungssensoreinrichtung zur Bestimmung einer Bewegungsrichtungsänderung des über das Oberflächenareal (2) geführten Sensors (10) in Bezug auf ein eingebettetes Objekt (3) ausgestattet ist, **dadurch gekennzeichnet, dass** die Bewegungssensoreinrichtung mit einem mindestens zweiachsigen Beschleunigungssensor (20) und einer von den Signalen des Beschleunigungssensors (20) gespeisten Einrichtung zur Messung der momentanen Wischgeschwindigkeit ($v_{x(t)}$, $v_{y(t)}$) und zur Erfassung der Richtungsänderungspunkte des über das Oberflächenareal (2) wischenden Sensors (10) in Bezug auf ein eingebettetes Objekt (3) ausgestattet ist.

**4.** Handgeführter Sensor nach Anspruch 3, wobei die Einrichtung zur Messung der momentanen Wischgeschwindigkeit mindest einen Integrator pro Beschleunigungssensor zur Bestimmung der momentanen Wischgeschwindigkeit des Sensors (10) und zur Detektion einer Richtungsänderung in Bezug auf ein in den Bauwerkuntergrund (1) eingebettetes Objekt (3) aufweist.

**5.** Handgeführter Sensor nach Anspruch 4, welcher eine Einrichtung zur Erfassung des durch den Sensor (10) bei wischendem Abtasten des Oberflächenareals (2) zurückgelegten Wegs (x(t), y(t)) aufweist.

**6.** Handgeführter Sensor nach Anspruch 3, wobei ein Trippel von Beschleunigungssensoren mit einem rechtwinklig zueinander stehenden Paar (20) von Beschleunigungssensoren und einem dritten in einem festgelegten Abstand (R) von dem Beschleunigungssensorpaar angeordneten Beschleunigungssensor (22) vorhanden ist, dessen Messachse auf eine der Messachsen des rechtwinklig zueinander stehenden Beschleunigungssensorpaars ausgerichtet ist.

**7.** Handgeführter Sensor nach einem der Ansprüche 3 bis 6, welcher ein den Rotationswinkel (Phi(t)) des Sensors (10) um einen Fixpunkt erfassendes Gyroskop (21) aufweist.

**8.** Handgeführter Senso nach Anspruch 7, wobei die Beschleunigungssensoren mikromechanische Beschleunigungsmesser sind und das Gyroskop ein mikromechanischer Vibrations-Drehratensensor nach dem Coriolisprinzip ist.

**9.** Handgeführter Sensor nach Anspruch 5, wobei die Einrichtung zur Wegerfassung einen optischen, zweidimensionalen Korrelator (23, 24) zur Bestimmung der Relativbewegung auf dem zu untersuchenden Oberflächenareal (2) des Bauwerkuntergrunds (1) aufweist.

**10.** Handgeführter Sensor nach Anspruch 9, welcher eine optische Visualisierungseinrichtung aufweist, bei welcher auf der Basis der von dem Korrelator gelieferten Signale eine Darstellung der Trajektorie des über das Oberflächenareal (2) wischenden Sensors (10) erfolgt.

**11.** Handgeführter Sensor nach Anspruch 10, welcher einen Wegmesser mit zwei in einem vorgegebenen Abstand zueinander stehenden Laserkorrelatoren aufweist.

**12.** Handgeführter Sensor nach Anspruch 11, wobei der Korrelator mindestens zwei in einem vorgegebenen Winkel zueinander stehende Laser-Abstandssensoren aufweist.

**13.** Handgeführter Sensor nach Anspruch 10, wobei der Korrelator ein in den Sensor (10) integrierter nach Art einer Computer-Maus arbeitender Laser-Stream-Sensor ist.

## Claims

**1.** Method for detecting objects embedded in structure bases, such as cables, reinforcement bars, conduit pipes and the like, by sweeping over a certain surface area (2) of the structure bases (1) using a handheld sensor (10) with an adaptive detection threshold, **characterised in that** in order to reduce faulty detection when determining the detection threshold a change in the direction of movement of the sensor (10) being moved over the surface area (2) is detected with reference to an embedded object (3), in which the acceleration of the handheld sensor (10) is detected in a least two directions with reference to an embedded object (3), from which acceleration values the relevant speed values are calculated and from the speed values a report on a change in the direction of movement of the sensor (10) is generated regarding an embedded object (3).

**2.** Method according to claim 1, in which a signal is generated from the speed values as a function of the sensor path and from that a report on the dimension and depth of the embedded object is obtained.

**3.** Handheld sensor with adaptive detection threshold for detecting objects embedded in structure bases, such as cables, reinforcement bars, conduit pipes and the like, by sweeping over a surface area (2) of a structure base (1) to be examined, in which in order to reduce faulty detection when determining the detection threshold the sensor (10) is fitted with a direction sensor device for determining a change in the direction of movement of the sensor (10) being moved over the surface area (2) with reference to an embedded object (3), **characterised in that** the movement sensor device comprises an acceleration sensor (20), which is at least bi-axial, and a device, which is fed by the signals of the acceleration sensor (20), for measuring the instantaneous sweeping speed ($V_{x(1)}$, $V_{y(1)}$) and for detecting the change in direction points of the sensor (10) sweeping over the surface area (2) with reference to an embedded object (3).

**4.** Handheld sensor according to claim 3, in which the device for measuring the instantaneous sweeping speed has at least one integrator per acceleration sensor for determining the instantaneous sweeping speed of the sensor (10) and for detecting a change in direction with reference to an object (3) embedded in the structure base (1).

**5.** Handheld sensor according to claim 4, which has a device for detecting the path (x(t), y(t)) taken by the sensor (10) when scanning by sweeping the surface area (2).

**6.** Handheld sensor according to claim 3, in which there is a trio of acceleration sensors with a pair (20) of acceleration sensors at right angles to each other and a third acceleration sensor (22) arranged at a set distance (R) from the pair of acceleration sensors, the measuring axis of which is aligned on one of the measuring axes of the pair of acceleration sensors at right angles to each other.

**7.** Handheld sensor according to one of claims 3 to 6, which has a gyroscope (21) detecting the rotation angle (Phi(t)) of the sensor (10) around a fixed point.

**8.** Handheld sensor according to claim 7, in which the acceleration sensors are micromechanical acceleration measuring devices and the gyroscope is a micromechanical vibration rotation rate sensor according to the Coriolis principle.

**9.** Handheld sensor according to claim 5, in which the device for detecting the path has an optical, two dimensional correlator (23, 24) for determining the relative movement on the surface area (2) of the structure base (1) to be examined.

**10.** Handheld sensor according to claim 9, which has an optical visualisation device, in which based on the signals provided by the correlator there is an illustration of the trajectory of the sensor (10) sweeping over the surface area (2).

**11.** Handheld sensor according to claim 10, which has a path measuring device with two laser correlators at a present distance from each other.

**12.** Handheld sensor according to claim 11, in which the correlator has at least two laser distance sensors at a preset angle to each other.

**13.** Handheld sensor according to claim 10, in which the correlator is a laser stream sensor working like a computer mouse, which is integrated into the sensor (10).

**Revendications**

**1.** Procédé de détection d'objets encastrés dans des sous-sols de constructions, tels que des câbles, des barres d'armature en fer, des tuyaux rigides et similaires en balayant une certaine zone à la surface (2) du sous-sol de construction (1) à vérifier au moyen d'un capteur (10) à guidage manuel présentant un seuil de détection variable, **caractérisé en ce que** pour minimiser une détection défectueuse lors de la détection du seuil de détection, une modification de direction de déplacement du capteur (10) guidé au-dessus de la zone en surface (2) est détectée par rapport à un objet (3) encastré, l'accélération du capteur (10) à guidage manuel est détectée dans au moins deux directions par rapport à l'objet (3) encastré, et on calcule à partir des valeurs d'accélération les valeurs de vitesse correspondantes et à partir des valeurs de vitesse, on génère une information concernant un inversement de direction de déplacement du capteur (10) guidé par rapport à un objet (3) encastré.

**2.** Procédé selon la revendication 1, selon lequel un signal est généré à partir des valeurs de vitesse et on obtient de ce signal une information concernant la dimension et la profondeur de l'objet encastré.

**3.** Capteur à guidage manuel présentant un seuil de détection variable servant à détecter des objets encastrés dans des sous-sols de constructions, tels que des câbles, des barres d'armature en fer, des tuyaux rigides et similaires en balayant une zone en surface (2) d'un sous-sol de construction (1) à explorer, le capteur (10) permettant de minimiser une erreur de détection lors de la détermination du seuil de détection d'un dispositif de détection de mouvement servant à déterminer une modification de direction de mouvement du capteur (10) guidé au-dessus de la zone en surface (2) par rapport à un objet (3) encastré, **caractérisé en ce que** le dispositif de détection de mouvement est équipé d'un capteur d'accélération (20) à au moins deux axes et d'un dispositif alimenté par les signaux du capteur d'accélération (20) et servant à mesurer la vitesse de balayage ($V_{x(t)}$, $V_{y(t)}$) actuel et servant à détecter les points de modification de direction du capteur (10) balayant la zone en surface (2) par rapport à l'objet (3) encastré.

**4.** Capteur à guidage manuel selon la revendication 3, selon lequel le dispositif servant à mesurer la vitesse de balayage actuel présente au moins un intégrateur par capteur d'accélération servant à déterminer la vitesse de balayage actuel du capteur (10) et servant à détecter une modification de direction par rapport à un objet (3) encastré dans le sous-sol de constructions (1).

**5.** Capteur à guidage manuel selon la revendication 4, lequel présente un dispositif servant à détecter le trajet (x(t), y(t)) parcouru par le capteur (10) en explorant par balayage la zone en surface (2).

**6.** Capteur à guidage manuel selon la revendication 3, selon lequel un trio de capteurs d'accélération comportant une paire (20) de capteurs d'accélération perpendiculaires l'un par rapport à l'autre et un troisième capteur d'accélération (22) disposé à une distance fixée (R) de la paire de capteurs d'accélération est présent, dont l'axe de mesure est orienté selon l'un des axes de mesure de la paire de capteurs d'accélération perpendiculaires l'un par rapport à l'autre.

**7.** Capteur à guidage manuel selon l'une quelconque des revendications 3 à 6, lequel présente un gyroscope (21) détectant l'angle de rotation (Phi(t)) du capteur (10) autour d'un point fixe.

**8.** Capteur à guidage manuel selon la revendication 7, selon lequel les capteurs d'accélération sont des accéléromètres micromécaniques et le gyroscope est un capteur de vitesse de rotation et de vibration micromécanique selon le principe de Coriolis.

**9.** Capteur à guidage manuel selon la revendication 5, selon lequel le dispositif servant à détecter le trajet présente un corrélateur optique à deux dimensions (23, 24) servant à déterminer le mouvement relatif sur la zone en surface (2) à explorer du sous-sol de construction (1).

**10.** Capteur à guidage manuel selon la revendication 9, lequel présente un dispositif de visualisation optique, dans le cadre duquel a lieu une représentation de la trajectoire du capteur (10) balayant la zone en surface (2) sur la base des signaux fournis par le corrélateur.

**11.** Capteur à guidage manuel selon la revendication 10, lequel présente un dispositif de mesure de distance parcourue équipé de deux corrélateurs laser se trouvant à une distance préfinie l'un par rapport à l'autre.

**12.** Capteur à guidage manuel selon la revendication 11, selon lequel le corrélateur présente au moins deux capteurs de distance laser se trouvant à distance l'un de l'autre d'un angle prédéfini.

**13.** Capteur à guidage manuel selon la revendication 10, sachant que le corrélateur est un capteur à flux laser intégré dans le capteur (10) fonctionnant à la manière d'une souris d'ordinateur.

37
33
10
34
30
31
31
32

Fig. 1

10
30
31
32
33
34
35
36
37
40
41
20 (22)
21
23
24

Fig. 2

Fall A
Fall B
2
1
3
x
s(t)
4
5
a
c
b
t

Fig. 3a

Fall A
Fall B
x
x
1
$3_1$
$3_2$
3
$4_1$
$4_2$
s(t)
s(t)
a
c
b
d
f
e
a
c
b
d
f
e
t
t

Fig. 3b

Fall A
x
1
$3_1$
$3_2$
Fall B
x
3
s(t)
t
a
b
c
s(t)
t
a
b

Fig. 3c

Trajektorie B
10
3
Trajektorie A
11
y
x

Fig. 4

11
12
$a_x$
$a_y$
Geschwindigkeitsschätzer
$V_x$ , $V_y$
13
Vorzeichenumkehr-Detektor
Vorzeichenumkehr
Flag
14

Fig. 5

Fall A
β
α
2
x
3
Fall B
ds
dx
β
2
α
x
3

Fig. 6

10
20
21
23
22
24
R
Scanrichtung mit hoher Separation
Scanrichtung mit geringer Separation

Fig. 7

33
Anzeige
42
Lokalisierer
$v_x(t),v_y(t)$
$x(t),y(t)$
Objektschätzer
43
20
25
Kalman Filter
$v_x(t),v_y(t)$
$x(t),y(t),\phi(t)$
Bewegungs-umkehrdetektor
Lookup Tabellen
4
4
2-achsiger Beschleunigungs-sensor
$a_x,a_y$
2D Strapdown inertiales Navigations-system
Rotationsdetektor
41
45
Schwellwert-detektor
Gyro auf xy-Achse
$\frac{\partial \varphi_{xy}}{\partial t}$
s(t)
40
Signal-aufbereitung für induktive Sensoren
28
22
Sensorspulen
35, 36
3
1


Fig. 8

33
Anzeige
$v_x(t), v_y(t)$
$x(t), y(t)$
42
Lokalisierer
Objektschätzer
43
20
25
Kalman Filter
$v_x(t), v_y(t)$
$x(t), y(t), \phi(t)$
2-achsiger Beschleunigungs-sensor
$a_x, a_y$
2D Strapdown inertiales Navigations-system
Bewegungs-umkehrdetektor
Lookup Tabellen
44
Rotationsdetektor
41
45
Schwellwert-detektor
1-achsiger Beschleunigungs-sensor
$a_x(\Delta y)$
s(t)
40
Signal-aufbereitung für induktive Sensoren
28
21
Sensorspulen
35, 36
3
1

Fig. 9

33
Anzeige
42
$v_x(t), v_y(t)$
x(t),y(t)
Lokalisierer
Objektschätzer
43
x(t),y(t),φ(t)
$v_x(t), v_y(t)$
Bewegungs-
umkehrdetektor
Lookup Tabellen
44
Rotationsdetektor
41
45
Schwellwert-
detektor
40
s(t)
23, 24
Signal-
aufbereitung für
induktive
Sensoren
28
2D-optischer
Korrelator
Sensorspulen
35, 36
1
3

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102005015326
- WO 2004095076 A
- DE 3535117 C1
- US 20040012600 A1


### In der Beschreibung aufgeführte Nicht-Patentliteratur


- **I. Alldred et al.** Determination of Reinforcing Bar Diameter and Cover by Analyising Traverse Profiles from a Cover Meter. *Conference Papers of International Symposium Non-Destructive Testing in Civil Engineering,* 26. September 1995, 721-728